# EUROPEAN PATENT APPLICATION

(11) **EP 2 487 588 A1**
(43) Date of publication of application: **15.08.2012**
(21) Application number: 11001156.6
(22) Date of filing: 12.02.2011
(51) Int. Cl.: G06F 9/455, G06F 9/445

(54) **Method and apparatus for on load virtualization of a software application**

(71) Applicant: ABB Technology AG, 8050 Zurich (CH)
(72) Inventor: Stich, Christian, 69493 Hirschberg-Leutershausen (DE); Dix, Marcel, 68167 Mannheim (DE); Maczey, Sylvia, 69493 Hirschberg (DE); Aleksy, Markus, 67071 Ludwigshafen (DE)
(74) Representative: Partner, Lothar

(57) **Abstract**

The invention relates to a method for virtualization of a software application on a physical machine, comprising the steps of:
- loading a hypervisor (5) on the physical machine (1);
- providing at least one guest operating system (3);
- creating, by the hypervisor (5), a virtual machine (2) and loading the at least one operating system (3) into the virtual machine (2);
- patching the at least one loaded operating system (3) by the hypervisor (5); for inserting one or more hypervisor enter-and-exit points and for modifying a load operation that the operating system (3) uses for loading the application;
- executing the patched operating system (3)
- loading the software application by the modified load operation.

## Description

### Technical field

The present invention relates to embedded systems, controllers and real-time systems which comprise virtual machines allowing the migration of existing software systems adapted to other platforms to be executed.

### Prior art

Virtual machines are well known in the art. A virtual machine is a software implementation of a programmable machine running on a physical machine such as a computer. The virtual machine executes programs like a physical machine and usually provides a complete system platform which supports the execution of a complete operating system. Such system virtual machines allow for sharing the resources of the underlying physical machine between multiple virtual machines each running its own operating system. The software layer providing the virtualization is called a virtual machine monitor or hypervisor.

There are several approaches to virtualization such as paravirtualization or hardware-assisted virtualization. Paravirtualization requires the guest operating systems to be modified and precompiled in order to be able to cooperate with the hypervisor. The paravirtualization usually requires a manual modification of the guest operating system and its recompilation, which often is difficult to accomplish. Therefore, the source code of the respective guest operating system needs to be available, which might not be the case for commercial operating systems.

In contrast thereto, hardware-assisted virtualization is a platform virtualization approach that enables full virtualization utilizing additional hardware capabilities. Without comprehensive hardware support, hypervisors need to emulate a significant part of the guest's hardware environment, thereby reducing performance.

In recent systems, CPUs introduced enhancements such as additional instructions and CPU modes to support virtualization. For instance, the CPUs support transitions between the user or supervisor and hypervisor state.

The hardware-assisted virtualization is thus tied to the respective CPUs used that provide additional virtualization features and cannot be used on CPUs without virtualization support.

Apart from virtualization, recompilation as well as binary code transformation can be used for the migration of existing applications to a new environment. However, the recompilation of existing application files also requires the availability of the source code.

With respect to applications, binary code transformation provides another basically suitable approach to software migration. It aims at translating the object code of an application (binary code) from a legacy machine to an equivalent object code for another machine. Although this task is easy to accomplish when a straight-forward sequence of machine instructions shall be translated from one machine language base to another, other considerations occurring when mixed data and instructions have to be translated make the task very difficult in practice. Moreover, this approach requires additional efforts due to the development and maintenance of software tools that analyze and adapt existing codes to the desired platform.

It is therefore an object of the present invention to render legacy applications executable on new hardware platforms without the need for modification by the developer. It is a further object of the present invention to provide a virtualization method which neither requires modifications and recompilations of the operating system and/or the applications nor the use of the virtualization support of CPUs having enhancements, such as additional instructions and CPU modes to support virtualization.

### Summary of the present invention

The above objects are achieved by the method for virtualization of a legacy binary code according to claim 1 and by the physical machine and the computer program product according to the further independent claims.

Preferred embodiments are indicated in the dependent subclaims.

According to a first aspect a method for virtualization of a software application on a physical machine is provided. The method comprises the steps of:
- loading a hypervisor on the physical machine;
- providing at least one guest operating system;
- creating, by the hypervisor, a virtual machine and loading the at least one operating system into the virtual machine;
- patching the at least one loaded operating system by the hypervisor; by inserting one or more hypervisor enter-and-exit points and by modifying a load operation that the operating system uses for loading the application;
- executing the patched operating system; and
- loading the software application by the modified load operation that is part of the operating system.

One idea of the above method for virtualization is that legacy applications can be executed on a physical machine without the need for modification of either the operating system or the legacy application by a developer using their source codes. Also, a virtualization support of the utilized CPU is not required. To achieve that the hypervisor is firstly loaded on an embedded device whereafter the hypervisor loads the operating system. The operating system is patched by the hypervisor before it is executed. The patch serves for the proper handling of the virtualization-sensitive instructions, by inserting hypervisor enter-and-exit points as well as modifying of the operating system's load operation for loading the application. Then the application is loaded by the modified load operation that is part of the operating system and patched by the hypervisor to run in a paravirtualized manner on the executed patched paravirtualized operating system.

Furthermore, the hypervisor may be loaded onto the physical machine using a bootloader.

According to another embodiment the patching may be performed by replacing machine code portions of the operating system with patching code to insert one or more hypervisor enter-and-exit points and to modify a load operation that is part of the operating system.

Furthermore, the application is patched to insert hypervisor enter-and-exit points.

According to a further aspect a computer system for virtualization of a software application is provided, the computer system comprises:
- a boot loader for loading a hypervisor on the physical machine, wherein the hypervisor is adapted
   - to create a virtual machine and to load at least one operating system into the virtual machine;
   - to patch the at least one loaded operating system by inserting one or more hypervisor enter-and-exit points and by modifying a load operation that is part of the operating system
wherein the patched operating system is executed and the software application is loaded by the modified load operation that is part of the operating system.

According to a further aspect, a computer program product including a software code which when executed on a data processing apparatus executes the above method.

### Brief description of the drawings

Preferred embodiments of the present invention will be described in more detail in conjunction with the accompanying drawings in which:
Figure 1 shows a schematic representation of a physical machine running a virtual machine; and
Figure 2 shows a flow chart illustrating the method for virtualization according to one embodiment of the present invention.

### Description of preferred embodiments

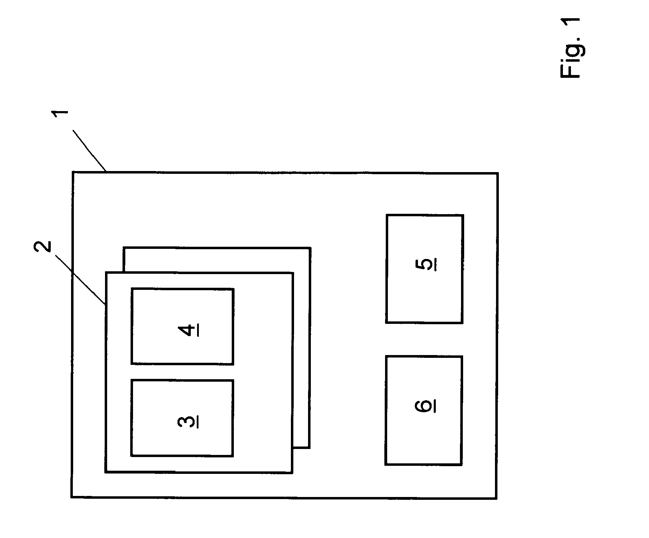

Figure 1 schematically shows a physical machine 1 which includes one or more virtual machines 2. The virtual machines 2 each include an operating system 3 and a real-time application 4 to be executed by means of the operating system 3.

An operating system is a software that runs on the physical machine or in the virtual machine environment and manages computer hardware resources. It provides common services for efficient execution of various application software. For hardware functions such as data input and output and memory allocation, the operating system acts as an intermediary between application programs and the computer hardware.

The operation of the virtual machines 2 is monitored by a hypervisor 5. The hypervisor 5 is responsible for establishing the one or more virtual machines, for loading a respective guest operating system 3 to an associated one of the virtual machines 2 and manipulating the respective guest operating system 3 such that it can be executed. In other words, the hypervisor 5 presents to the guest operating system a virtual operating platform and monitors the execution of the guest operating system. Furthermore, on the physical machine 1 a boot loader 6 is installed which controls how the hypervisor 5 and the virtual machines 2 are booted and executed. The boot loader 6 may be the first program code which is executed when the physical machine 1 is switched on.

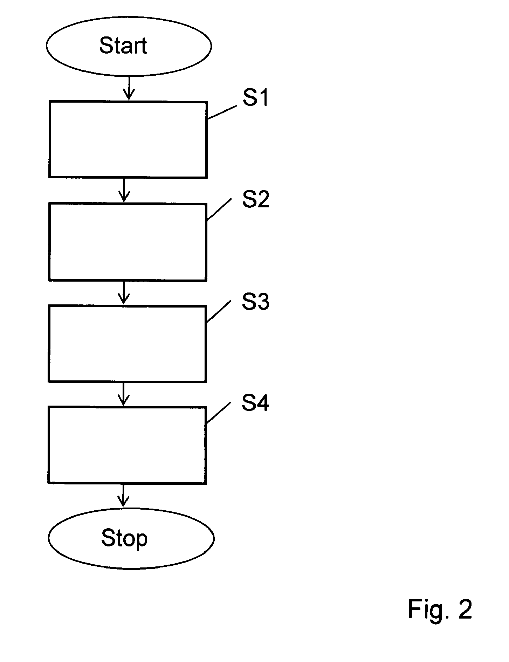

The method for virtualization is carried out according to the flow chart shown in Figure 2. In step S1, the hypervisor 5 is loaded on the physical machine 1 initiated by the preinstalled boot loader 6. In step S2 the hypervisor 5 creates for each available guest operating system a respective virtual machine 2 and loads an associated one of the operating systems 3 in the respective virtual machine 2.

In step S3, the loaded operating system 3 is patched by the hypervisor 5 before the respective operating system 3 is executed. Patching the operating system 3 is performed in order to achieve a proper handling of the virtualization-sensitive instructions and serves for inserting hypervisor 5 enter-and-exit points as well as for modifying the operating system's load operation that is used for loading the application.

The step of patching is performed by replacing machine code portions of the operating system 3 with patching code. The patching code includes one or more hypervisor enter-and-exit points and modifies a load operation that is part of the operating system.

Several possibilities exist to do the patching, some of them are for example:
1. The Hypervisor has access to a (hash-)table that lists the code that needs to be exchanged and the code that these code fragments have to be substituted with. The actual exchange of the code could e.g. be done by using a Memory Management Unit (MMU) for the necessary mapping.
2. The hypervisor parses the code and/or simulates the code execution to identify the parts of the code that need to be exchanged. Code fragments that include sensitive instructions or directly access hardware functions are replaced with hypervisor-related instructions such as hypervisor entry and exit operations.

In step S4, the application is loaded by the modified load operation that is part of the operating system 3 and patched by the hypervisor 5 to be executed in a paravirtualized manner on the executed patched paravirtualized operating system 3. Using this method, original binary codes for applications of legacy systems can be executed on newly developed systems such as the physical machine 1.

The benefits offered by the above method are to render legacy applications executable on new hardware without the need for modification by a developer. The migration procedure is moved to introducing a paravirtualization approach only by automatic patching. Furthermore, neither modifications and recompilations of the operating system 3 and/or applications are necessary nor is the virtualization support of the utilized CPU required.

### REFERENCE LIST

- 1: physical machine
- 2: virtual machine
- 3: operating system
- 4: application program
- 5: hypervisor
- 6: boot loader

## Claims

1. Method for virtualization of a software application on a physical machine, comprising the steps of:
- loading a hypervisor (5) on the physical machine (1);
- providing at least one guest operating system (3);
- creating, by the hypervisor (5), a virtual machine (2) and loading the at least one operating system (3) into the virtual machine (2);
- patching the at least one loaded operating system (3) by the hypervisor (5); for inserting one or more hypervisor enter-and-exit points and for modifying a load operation that the operating system (3) uses for loading the application;
- executing the patched operating system (3)
- loading the software application by the modified load operation.

2. Method according to claim 1, wherein the hypervisor (5) is loaded onto the physical machine (1) using a bootloader (6).

3. Method according to claim 1 or 2, wherein the patching is performed by replacing machine code portions of the operating system (3) with patching code to insert one or more hypervisor enter-and-exit points and to modify the load operation.

4. Method according to one of the preceding claims, wherein the application is patched to insert hypervisor enter-and-exit points (5).

5. Computer system for virtualization of a software application, the computer system comprises:
- a boot loader (6) for loading a hypervisor (5) on the physical machine (1), wherein the hypervisor (5) is adapted
- to create a virtual machine (2) and to load at least one operating system (3) into the virtual machine (2);
- to patch the at least one loaded operating system (3) for inserting one or more hypervisor enter-and-exit points and for modifying a load operation the operating system (3) uses to load the application;
wherein the patched operating system (3) is executed and wherein the software application (4) is loaded by the modified load operation.

6. Computer program product including a software code which when executed on a data processing apparatus executes the method according to one of the claims 1 to 4.
